# EUROPEAN PATENT SPECIFICATION

(11) **EP 3 973 624 B1**
(45) Date of publication and mention of the grant of the patent: **24.05.2023**
(21) Application number: 20764016.0
(22) Date of filing: 12.08.2020
(51) Int. Cl.: H02M 1/12, H01F 27/38, H02M 7/493, H02M 1/00

(54) **INDUCTIVE REACTANCE APPARATUS**
INDUKTIVE REAKTANZVORRICHTUNG
APPAREIL À RÉACTANCE INDUCTIVE

(30) Priority: 20.08.2019 EP 19192527
(43) Date of publication of application: 30.03.2022
(73) Proprietor: Siemens Aktiengesellschaft, 80333 München (DE)
(72) Inventor: MONDAL, Gopal, 91058 Erlangen (DE); ROBINSON, Jonathan, 90489 Nürnberg (DE)
(74) Representative: Siemens Patent Attorneys
(86) International application number: PCT/EP2020/072597
(87) International publication number: WO 2021/032558

(56) References cited:
- JP-A- H03 217 008
- JP-A- 2006 222 387
- US-A1- 2006 043 922
- US-A1- 2014 125 430
- US-B1- 6 169 677

## Description

The invention relates to an inductive reactance apparatus for use with an energy converter comprising at least two converter units operating in a parallel manner, wherein the inductive reactance apparatus is configured to couple the at least two converter units with a power grid, both providing at least two phases of an alternating voltage, the inductive reactance apparatus comprising at least two first magnetic members, wherein one of the first magnetic members is provided for each one of the at least two converter units, each of the first magnetic members has a number of first limbs corresponding to the number of the phases, each of the first magnetic members has a first and a second yoke member, wherein first ends of the first limbs are connected to the first yoke member, and second ends of the first limbs are connected to the second yoke member, and each of the first limbs is provided with a respective first winding having a first end adapted to be connected with a respective one of the converter units and a second end configured to be coupled with a respective one of the phases of the power grid, wherein all these first windings have the same sense of winding. Moreover, the invention also relates to an energy converter for coupling an energy source connected to the energy converter with a power grid, both of the energy converter and the power grid providing at least two phases of an alternating voltage, the energy converter comprising at least two converter units, each of the converter units being configured to provide power conversion with regard to the at least two phases, a control device for controlling at least the converter units, wherein the control device is configured to operate the converter units in a parallel manner, and an inductive reactance apparatus for connecting the converter units with the power grid.

Energy converters as well as inductive reactance apparatuses are well known in the art so that it appears not necessary to indicate specific related documents of the art. Generally, energy converters are used in the technical field of generating or distributing of electric power. Energy converters are suited to couple at least two energy distributing networks for example a DC-network with an AC-network, or the like. The DC-network may be provided by an energy source such as a battery device, a photovoltaic module, a wind generator and/or the like. It also may be provided by a generator supplying an alternating voltage that may have one/or more phases. The AC-network may be adapted to provide two or more phases of an alternating voltage. Therefore, the energy converter can be any of, for example, a DC/DC-converter for instance such as a booster, a buck, or the like, an AC/DC-converter, such as an inverter, an AC/AC converter such as a frequency converter, or the like.

Today, energy converters are usually formed as static energy converters id est, they - contrary to dynamic energy converters - do not have any moveable, especially rotatable, parts for the purpose of energy conversion. Static energy converters are usually formed as switched electric energy converters and include, for the purpose of energy conversion, at least one converter inductivity as well as at least one switching element which are connected with each other such that suitable switching of the switching element provides the energy conversion. In the present case, each converter unit comprises at least one converter inductivity and at least one switching element.

A switching element in this disclosure preferably refers to a controllable electronic switching element, especially, a controllable electronic semiconductor switch provided, for instance, by a transistor operated in a switching mode, a thyristor, combined circuitries with such semiconductor switches, preferably with fly back diodes parallel connected to the semiconductor switch, a gate-turn-off-thyristor (GTO), an insulated-gate-bipolar-transistor (IGBT), combinations thereof, or the like. Basically, the switching element may also be formed by at least one field effect-transistor, especially, a metal-oxide-semiconductor-field effect transistor (MOSFET).

For the purpose of energy conversion, the at least one switching element is operated in a switching mode. With regard to the semiconductor switch formed by a transistor, this requires that, in a switched-on status, between connections of the transistors forming a switchable path, a very low electric resistance is provided so that a high current flow is established at a very small residual voltage. In a turned-off status, the switching path of the transistor provides a high resistance so that, when the voltage at the switching path is very high, substantially no or only a very small, especially, neglectable current flow is allowed. Differing here from is a linear mode of transistors, which is usually not used in switched energy converters.

The energy converter therefore allows an electric coupling between the networks which the energy converter is connected with in order to provide an energy exchange between these networks. For instance, if the energy converter is connected to a DC-network, on one hand, and to an AC-network, on the other hand, the energy converter provides for a suited voltage adaptation so that the energy coupling can be realized. The energy converter is designed respectively.

The energy converter, especially its converter units, need not only have one single converter inductivity and/or one single switching element. Depending on the application, two or more switching elements and/or two or more converter inductivities can be provided for each of the converter units in order to provide the required energy conversion.

Preferably, the switching elements are connected with a control device in order to control the switching operation of the switching elements with regard to their switched status. Preferably, the connection is formed such that each of the switching elements can be controlled individually.

The control device can be provided by an electronic circuitry generating the respective control signals for the switching elements so that the desired switched mode of the respective switching element can be achieved. The electronic circuitry can have electronic components for generating the control signals. Moreover, the electronic circuitry can also comprise a computer for generating the control signals which is controlled by a computer program. Especially, the control device can consist of the computer only. The control device may be a separate component with regard to the energy converter or its converter units. However, it is preferably integral with the energy converter, especially its converter units.

The control device is configured to control the switching elements with regard to their switching status so that the energy converter, especially its converter units, provide the desired energy conversion function between the energy distribution networks connected to the energy converter.

Moreover, the control device is preferably configured to control the power to be converted by the energy converter, especially the converter units. The control device may control the converted power individually for each of the converter units. In order to provide this control functionality, the control device may be connected with one or more respective sensor elements which allow determining, for instance, a respective voltage, a respective current, a respective electric power, and/or the like. The at least one sensor element may be a separate component or it may be an integral component of the energy converter.

Especially, if the energy converter is configured to convert high electric power, the energy converter is usually composed of two or more converter units which are operated in a parallel manner. This design has some technical advantages as it is possible to reduce electromagnetic interferences and to increase the efficiency especially with regard to a low power requirement.

Energy converters, which may be configured as frequency converters or the like, are usually operated in the switching mode. The switching mode can be based on pulse wide modulation (PWM) in order to allow energy conversion with a high degree of efficiency. Such switching modes are well known in the art. Two major methods for providing PWM are preferably used, namely, continuous pulse wide modulation (CPWM) and discontinuous pulse wide modulation (DPWM).

In order to provide reduction of interferences, especially interferences on conductors or lines, respectively, the energy converter usually comprises the inductive reactance apparatus. The inductive reactance apparatus usually comprises an electronic circuitry composed of inductivities and capacitors. Especially, it is well known to provide a LCL-filter with the inductive reactance apparatus. The inductive reactance apparatus is suited to reduce distortion and/or interferences caused by the switching elements of the converter units during the determined operation of energy conversion. The distortion may comprise one or more of the switching frequencies and harmonics caused by the converter units.

In order to reduce or eliminate electric interferences, especially with regard to the conductors of the respective energy distribution networks, the energy converter may comprise usually the inductive reactance apparatus. The inductive reactance apparatus comprises plural electric components and may be a heavy apparatus. As the switching frequency of the energy converter, especially its converter units, is usually much higher than a frequency of the voltage of the network, especially the alternating voltage, the inductive reactance apparatus serves to reduce interferences caused by this operation.

Also, the operation of the energy converter causes a respective high-frequency ripple on the desired alternating voltage which is supposed to be reduced by the inductive reactance apparatus. Filtering components such as the before-mentioned inductivities or chokes, respectively, are required. These components are usually heavy components and expensive.

A respective inductive reactance apparatus is already disclosed by US 2017/0229937 A1 related to a choke for interleaved switching. Although this teaching has been considered by those skilled in the art, further improvement is desired. Especially, this teaching fails to consider common mode interferences.

A common mode filter at the output of parallel connected inverters is disclosed in US2006043922. The connection of magnetic cores of differential and common mode chokes is discussed in JPH03217008 and US2014125430.

Therefore, it is the object of the invention, to improve an inductive reactance apparatus as well as an energy converter such that the size and the costs of such a component can be reduced and/or the efficiency of reduction of interferences can be improved.

As a solution, the invention proposes an inductive reactance apparatus as well as an energy converter according to the independent claims.

Preferable embodiments can be derived from the features according to the dependent claims.

According to a first aspect for a generic inductive reactance apparatus, it is proposed that the inductive reactance apparatus comprises a second magnetic member having a number of second limbs corresponding to the number of the phases and a third and a fourth yoke member, wherein first ends of the second limbs are connected to the third yoke member and second ends of the second limbs are connected to the fourth yoke member, wherein each of the second limbs is provided with at least one second winding having a first end being connected with at least one of the respective first windings and a second end configured to be connected with a respective one of the phases of the power grid, in order to couple the at least one of the respective first windings with a respective one of the phases of the power grid, and wherein the yoke members are arranged such that the first yoke members are connected with the third yoke member and the second yoke members are connected with the fourth yoke member.

With regard to a second aspect for the generic inductive reactance apparatus, it is proposed that the inductive reactance apparatus comprises a second magnetic member having a third and a fourth yoke member, wherein the yoke members are arranged such that the first yoke members are connected with the third yoke member and the second yoke members are connected with the fourth yoke member, and the third and/or the fourth yoke member comprises a common mode suppression winding.

With regard to the energy converter it is proposed that the inductive reactance apparatus is designed according to the first or the second aspect of the invention.

The invention is based on the idea that interferences, especially on the lines or conductors, respectively, can be differential mode interferences and/or common mode interferences. Generation of such interferences is limited by, for instance, law, standard, and/or the like. Such operating conditions, also referred to as electromagnetic compatibility (EMC), are the ability of electric equipment and systems to be operated in its electromagnetic environment, by limiting undesired generation, propagation and reception of electromagnetic energy which may cause unwanted effects such as electromagnetic interference (EMI), or even physical damage in an operating equipment. The target of EMC is a correct, undisturbed operation of different equipment in a common electromagnetic environment. Consequently, the inductive reactance apparatus is directed to reduce emission of electromagnetic energy which is generated by the operation of the converter units. A certain standard, dealing with EMC, is, for example, EN 61000. However, further standards can be relevant for a specific applications, so e.g. EN 50121 for track-bound vehicles and devices, or the like.

In this regard, the inductive reactance apparatus of the invention is preferably directed to reduce both, the differential mode interferences as well as the common mode interferences. This improves also the teaching of US 2017/0229937 A1 which does not deal with the different kinds of interferences, and which's teaching appears to consider not common mode interferences. Therefore, it is a thought of the invention to integrate a common mode reduction property into an inductive reactance apparatus such as known from the US 2017/0229937 A1. So, the size of the inductive reactance apparatus and its costs can be reduced.

According to the invention, the before-mentioned thought can be realized by the second magnetic member which is additionally provided to the first magnetic members. Preferably, for each converter unit, a respective first magnetic member is provided. Therefore, also preferably, the number of first magnetic members corresponds to the number of converter units. However, it may also be possible to have more than one first magnetic member allocated to a specific one of the converter units. Moreover, the converter units are usually adapted to the power grid which is usually adapted to be operated with an alternating voltage. In the present case, the alternating voltage is provided by at least two phases. However, a common public power grid has usually three phases, wherein the three phases are deviating by an angle of about 120°.

Each of the converter units is configured to provide an alternating voltage for each of the phases of the power grid. Therefore, each of the first magnetic members has a number of first limbs corresponding to the number of the phases. Moreover, each of the first magnetic members has a first and a second yoke member, wherein the first ends of the first limbs are connected to the first yoke member, and the second ends of the first limbs are connected to the second yoke member. The connection can be provided by contact or the like. The connection can be established by using an adhesive or a clamping member forcing the limbs and the yoke member together in a certain arrangement. The limbs and the yoke members are made from a ferromagnetic material such as iron, nickel, cobalt, an alloy therefrom, or the like. They may also be made from sheets containing one of the before-mentioned components which are insulated against each other. The limbs and the yoke members therefore form a magnetic circuitry for guiding magnetic flux.

Each of the first limbs is provided with a respective first winding having a first end adapted to be connected with a respective one of the converter units, namely, a respective phase of the respective converter unit. A second end of the first winding is configured to be coupled with a respective one of the phases of the power grid. Therefore, via the inductive reactance apparatus, each of the converter units is connected with each of the phases of the power grid. Also, all these first windings have the same sense of winding. This allows a proper efficiency with regard to reduction of interferences and/or manufacturing the windings and the magnetic members as a module so that the inductive reactance apparatus can be easily assembled by providing a respective number of first magnetic members.

Moreover, the second magnetic member which comprises second limbs and the third and the fourth yoke member may be made from the same material as the first limbs and the first and the second yoke member of the first magnetic members. However, depending on the application, the material may be deviating. But it should be considered that the material preferably should be a ferromagnetic material.

The first magnetic members are preferably provided for reducing the differential mode interferences. The second magnetic member is preferably provided for reducing common mode interferences.

The second magnetic member is coupled to the first magnetic member by connecting the first yoke members with the third yoke member and the second yoke members with the fourth yoke member. Therefore, the second magnetic member adds the magnetic circuitries provided by the first magnetic members such that a single overall magnetic circuitry is provided, wherein the second magnetic member couples the first magnetic members. This allows a very small size of the inductive reactance apparatus so that costs can be reduced and a high efficiency can be achieved.

According to the first aspect, the second magnetic member has a number of second limbs corresponding to the number of the phases, wherein first ends of the second limbs are connected to the third yoke member and second ends of the second limbs are connected to the fourth yoke member. Moreover, each of the second limbs is provided with at least one second winding having a first end being connected with at least one, preferably all, of the respective first windings which belong to the same phase, and a second end configured to be connected with a respective one of the phases of the power grid. In this way, coupling of the respective first windings with the respective one of the phases of the power grid can be established.

Therefore, an inductive reactance apparatus can be achieved according to the first aspect, which is adapted to reduce differential mode interferences as well as common mode interferences at a small size and/or small costs.

In an exemplary embodiment, it is proposed that the sense of the winding of the first windings is inverse to the sense of the winding of the second windings. Especially with regard to the first aspect, this allows a good reduction of the common mode interferences in an easy way. The number of the turns of the windings can be easily resulted by some few experiments, calculation and/or the like. Therefore, the inventive effect can be further improved.

According to a further exemplary embodiment, the second magnetic member has an additional limb without any winding, the additional limb being connected with the third and the fourth yoke member, wherein the sense of the winding of the first windings is the same as the sense of the winding of the second windings. In this embodiment, the additional limb which may be of the same material than the second limbs, allows having the second windings in the same sense than the first windings. Nevertheless, a proper reduction of the common mode interferences can be achieved. The effect of the inductive reactance apparatus according to the invention can be further improved.

Moreover, according to another exemplary embodiment, it is proposed that the connection between at least one of the first yoke members and the third yoke member and/or between least one of the second yoke members and the fourth yoke member comprises an air gap. The air gap allows to adapt the magnetic resistance of the magnetic circuitry so that certain effects can be achieved improving the effect of reduction with regard to interferences. The air gap may depend on the material of the limbs and the yoke members and the magnetic flux which need to be guided by the limbs and the yoke members. Further improvement of the effect with regard to reduction of interferences can be achieved.

According to another exemplary embodiment, each of the second windings comprises a number of independent winding portions corresponding to the number of the first windings of a respective one of the first magnetic members, wherein each of the winding portions is connected with at least one of the respective ones of the first windings. Therefore, the second windings are preferably provided by a number of separated winding portions, wherein each winding portion is allocated to a certain one of the respective first windings or phases, respectively. Therefore, a winding portion may be directly connected with a respective one of the first windings. As the winding portions may belong to different phases, they are preferably insulated against each other. The winding portions have preferably the same sense of winding with regard to each other. Winding portions of different second windings which are allocated to a certain one of the phases of the power grid can be connected directly to the respective one of the phases of the power grid. This construction enhances a good common mode interference reduction.

According to a further exemplary embodiment, for each of the second windings, the first end of the second windings is connected with the second ends of all of the first windings corresponding to the same phase. In this regard, only one second winding is provided for each of the second limbs. Therefore, a respective connection is provided by the inductive reactance apparatus. This allows an easy apparatus design which is feasible with regard to handling for connection.

With regard to another exemplary embodiment, the inductive reactance apparatus comprises at least two capacitors, wherein one capacitor is provided for each of the phases, wherein a certain one of the at least two capacitors is connected to the first end of the respective second winding. This allows to provide a LCL-filter by the inductive reactance apparatus so that no further components need to be provided in order to realize the desired function. Preferably, the capacitors can be integrated in the inductive reactance apparatus. Moreover, for each of the phases of the power grid, at least one capacitor can be provided. The connection of the capacitors and the windings can be internal of the inductive reactance apparatus.

In a further exemplary embodiment, the third and/or the fourth yoke member comprises a common mode suppression winding. With the common mode suppression winding, it is possible to improve the effect of reducing common mode interferences. The common mode suppression winding can be easily provided on a certain one of the third and/or the fourth yoke member. The common mode suppression winding may be integrated preferably in a neutral line between the power grid and the energy converter. However, it also may be provided by windings for each of the phases of the power grid which are separated from each other and, preferably, are insulated against each other. At least one winding may be provided for each of the phases.

According to the second aspect of the invention, no second windings need to be provided. For this aspect, it is only necessary to have a common mode suppression winding in order to have reduction with regard to common mode interferences. However, this aspect can be combined with the first aspect.

This is a very easy and simple design which allows a small size and reduced costs. Further, with regard to the second aspect, according to an exemplary embodiment, the second magnetic member has a number of second limbs corresponding to the number of the phases, wherein the first ends of the second limbs are connected to the third yoke member and the second ends of the second limbs are connected to the fourth yoke member, wherein each of the second limbs are provided with at least one second winding having a first end being connected with at least one of the respective first windings and a second end configured to be connected with a respective one of the phases of the power grid, in order to couple the at least one of the respective first windings with a respective one of the phases of the power grid. The effects and the design correspond to the design and the effects already discussed with regard to the first aspect, which is why it is referred hereto.

In an additional exemplary embodiment, at least one of the first limbs is provided with an air gap. This allows to design the magnetic circuitry, especially with regard to reduction of differential mode interferences. In this regard, also magnetic characteristics as well as the magnetic flux guided by the first limbs can be considered in order to design the air gap. Further improvement of the function of the inductive reactance apparatus can be achieved.

Moreover, according to another exemplary embodiment, at least one of the third and fourth yoke member is provided with an air gap. Preferably, the air gap is provided in one or both connections of the third and fourth yoke member with the first and second yoke members. This allows to design the magnetic coupling between the first and the second magnetic member. The inductive reactance apparatus can be further improved. The air gap can be realized as discussed above.

One further exemplary embodiment proposes that a housing is provided configured to include the magnetic members and at least one capacitor. Therefore, an integral component can be achieved that can be handled easily by those skilled in the art. Moreover, the housing allows to secure the components against external mechanical and/or atmospheric impacts.

With regard to the energy converter, according to an additional exemplary embodiment, the control device is configured to operate the converter units in an interleaved parallel manner. The operation of the interleaved parallel manner allows reducing a ripple current so that interferences can be reduced. Moreover, with the interleaved operation of the converter units, the inductive reactance apparatus can be easily adapted to provide proper reduction of the interferences which are emitted by the converter units. Especially with regard to the interleaved operation of the converter units, a simple and easy inductive reactance apparatus can be achieved so that size and costs can be reduced.

The teaching of the present invention can be readily understood and at least some additional specific details will appear by considering the following detailed description of some exemplary embodiment in conjunction with the accompanying drawings. In the drawings, same reference characters correspond to same components and functions. In the drawings, it is shown:
- FIG 1: a schematical block diagram of a structure of a DC-network and a 3-phase power grid being coupled by an energy converter having an inductive reactance apparatus;
- FIG 2: a schematically 3-dimensional perspective view of the inductive reactance apparatus according to FIG 1;
- FIG 3: a schematic circuitry of the energy converter having two converter units according to a first design;
- FIG 4: a schematic circuitry as FIG 3 according to a second design;
- FIG 5: a schematic 3-dimensional design of an inductive reactance apparatus having an ICT;
- FIG 6: a schematic cross-sectional view of the ICT according to FIG 5;
- FIG 7: a schematic 3-dimensional view according to FIG 5 of an inductive reactance apparatus having an IICT;
- FIG 8: a schematic cross-sectional view of the IICT according to FIG 7;
- FIG 9: a schematic block diagram according to FIG 1, wherein the energy converter has three converter units;
- FIG 10: a schematic block diagram similar to FIG 9, wherein the inductive reactance apparatus is provided as a single integral unit;
- FIG 11: a schematic side view of a second magnetic member of the inductive reactance apparatus according to FIG 10;
- FIG 12: a schematic side view of the first magnetic member of the inductive reactance apparatus according to FIG 10;
- FIG 13: a schematic perspective view of an inductive reactance apparatus without common mode suppression;
- FIG 14: a schematic perspective view according to FIG 13, wherein a common mode suppression element is added;
- FIG 15: a schematic perspective view according to FIG 14, wherein the connections to the converter units and to the grid as well as two capacitors are shown for an energy converter having two converter units;
- FIG 16: a schematic perspective view similar to FIG 15 for an energy converter having three converter units;
- FIG 17: a schematic perspective view according to FIG 15 showing magnetic couplings;
- FIG 18: a schematic diagram of voltages of the three phases of the power grid resulted by an inductive reactance apparatus according to FIG 11, 12;
- FIG 19: a schematic diagram of harmonics of the voltages according to FIG 18;
- FIG 20: a schematic diagram according to FIG 16 resulted by an inductive reactance apparatus according to FIG 11, 13;
- FIG 21: a schematic diagram similar to FIG 19 for the conditions according to FIG 20;
- FIG 22: a schematic diagram of voltages according to FIG 20 for an inductive reactance apparatus according to FIG 14;
- FIG 23: a schematic diagram similar to FIG 19 and 21 for the conditions according to FIG 22;
- FIG 24: a schematic perspective view of an inductive reactance apparatus having an additional common mode winding based on the design according to FIG 15; and
- FIG 25: a schematic perspective view of an inductive reactance apparatus according to FIG 13 having an additional common mode winding.

In the FIG, same reference characters correspond to same components or same functions, respectively.

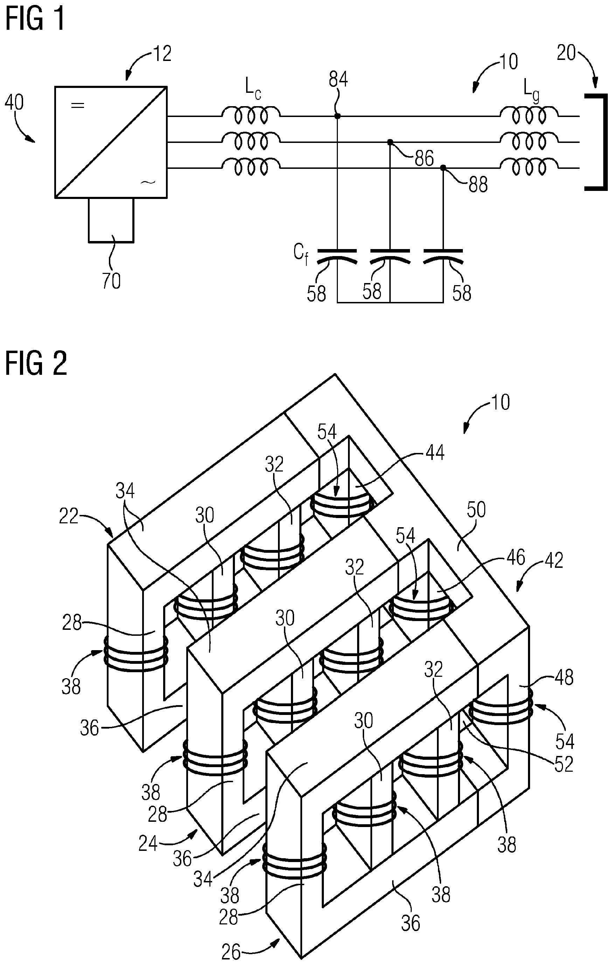

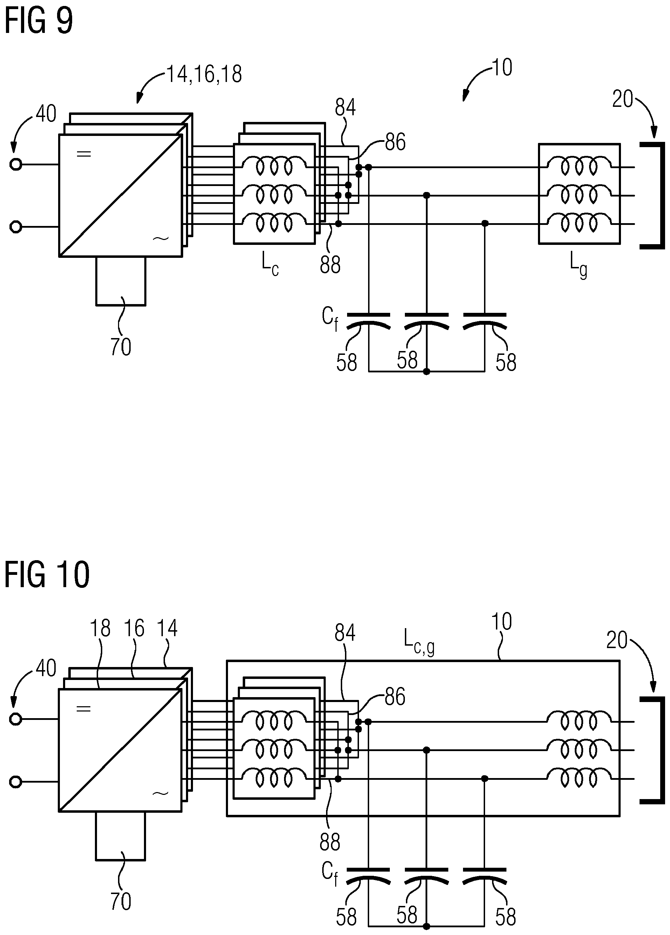

FIG 1 shows a schematic block diagram of a DC-network 40 and a power grid 20 being electrically coupled by an energy converter 12 which comprises three converter units 14, 16, 18 (FIG 9) which are connected with the power grid 20 via a LCL-filter 10 as an inductive reactance apparatus.

Each of the converter units 14, 16, 18 is provided by a three-phase inverter which is connected to the DC-network 40 as an energy source, on the one hand, in order to supply electric energy to the power grid 20. On the other hand, all of the three converter units 14, 16, 18 are connected with each of the phases of the power grid 20.

For this purpose, each of the converter units 14, 16, 18 provides three phases of the power grid 20. Therefore, the converter units 14, 16, 18 are operated in parallel manner. For this purpose, the converter unit 14, 16, 18 are controlled by a control device 70 which is enclosed by the energy converter 12. Although energy conversion from the DC-network 40 to the power grid 20 is described, a bidirectional power transfer is possible so that the opposite energy direction may be provided such that electric energy is supplied from the power grid 20 to the DC-network 40. However, for the purpose of the invention, the direction of the energy flow is not relevant.

FIG 1, 9 show the structure of the inductive reactance apparatus 10, namely, inductivities L_{c} which have a first end connected to a certain phase output of a certain one of the converter units 14, 16, 18, and a second end, wherein the second ends relating to a certain one of the phases of the power grid 20 are connected with each other in order to form nodes 84, 86, 88. Each of the nodes 84, 86, 88 is connected to a first end of one of three capacitors 58, wherein the second ends of the capacitors 58 are connected with each other. The before-mentioned nodes 84, 86, 88 are connected to first ends of inductivities L_{g}, wherein second ends of the inductivities L_{g} are connected to the respective phases of the power grid 20.

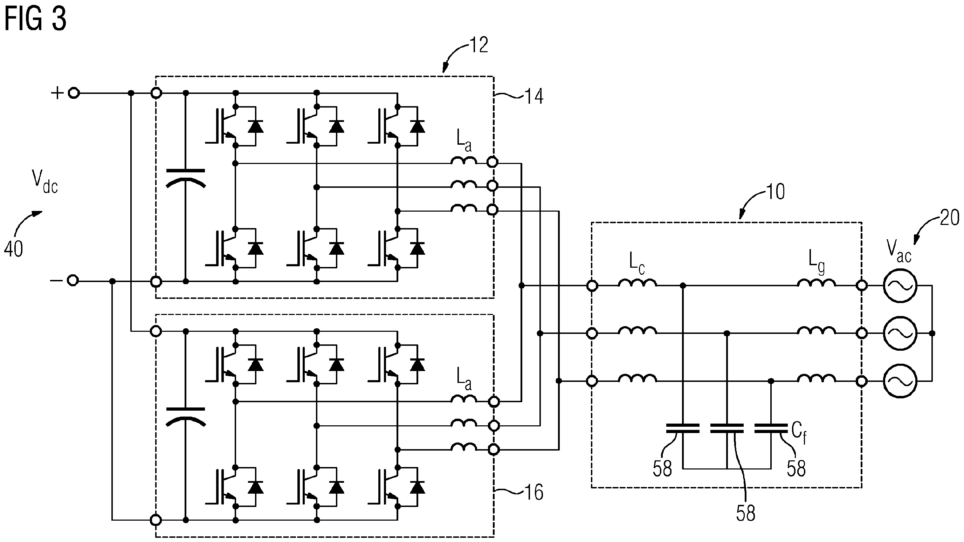

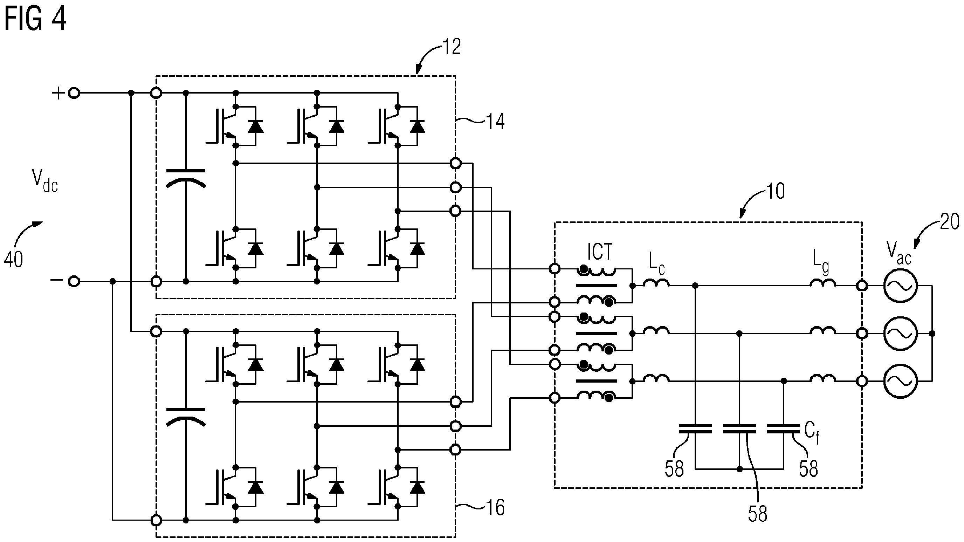

FIG 3 shows in an exemplary embodiment two converter units 14, 16 of the energy converter 12 as discussed above in a first design. FIG 4 shows a second design based on the circuitry according to FIG 4. As can be seen from FIG 3 and FIG 4, the LCL-filter 10 from FIG 4 differs from the LCL-filter 10 according to FIG 3 by additional inter cell transformers (ICT) which reduce inter current flows between the different converter units 14, 16, 18.

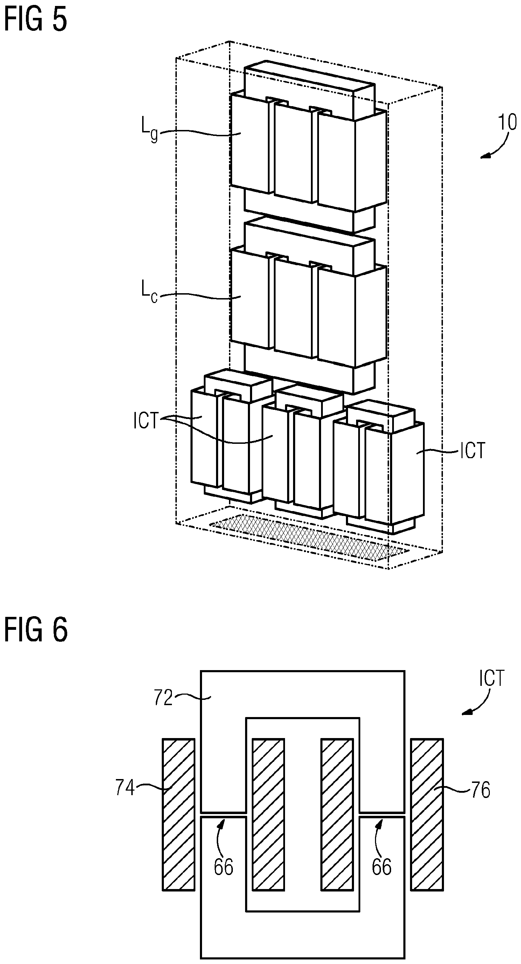

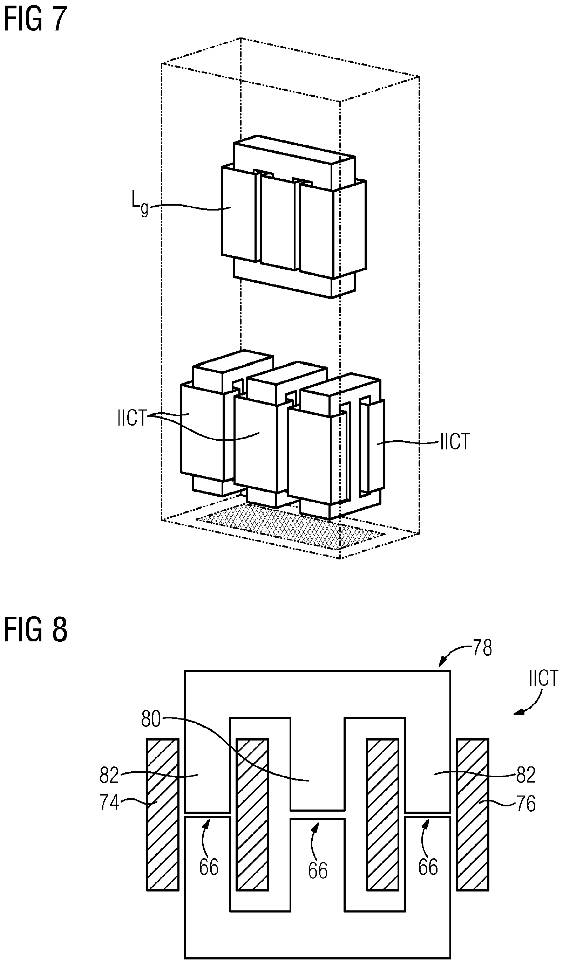

FIG 5 shows a respective perspective view of a design of the LCL-filter 10 according to FIG 3, wherein FIG 7 shows a respective schematic perspective view of the LCL-filter 10 according to FIG 4.

The LCL-filter 10 according to FIG 5 comprises the ICT which is shown in a cross-sectional view in FIG 6. As can be seen from FIG 6, a transformer is provided comprising a magnetic core 72, which is composed of two parts having a general U-shape and forming air gaps 66 at opposing surfaces of the U-shaped portions of the magnetic core 78. About the air gaps 66, windings 74, 76 are provided corresponding to the circuitry according to FIG 4. In FIG 6, the air gaps 66 have substantially the same size. However, in differing applications, the air gaps 66 may differ from each other.

FIG 8 shows a schematic cross-sectional view of the IICT according to FIG 7. As can be seen from FIG 8, the IICT is based on the ICT according to FIG 6 but it has a magnetic core 78 being formed of two E-shaped core components which are arranged opposed to one another. Between the opposing surfaces, air gaps 66 are provided. The magnetic core 78 provides an inner limb 80 as well as two outer limbs 82. The outer limbs 82 are provided with windings 74, 76 according to FIG 8. The inner limb 80 is not provided with any winding. The design of the IICT according to FIG 8 allows that the inductivity L_{c} according to FIG 4 can be avoided.

FIG 10 shows a schematic block diagram according to FIG 9, wherein the inductive reactance apparatus 10 is now provided by a single component. FIG 2 shows a respective 3-dimensional design of the inductive reactance apparatus 10 according to FIG 10.

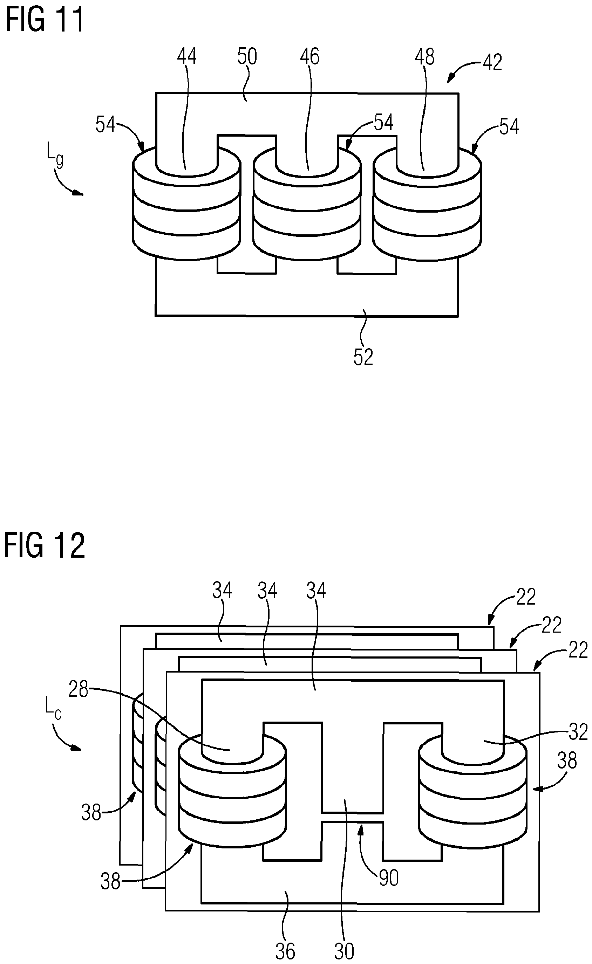

As can be seen from FIG 2, the inductive reactance apparatus comprises three first magnetic members 22, 24, 26, wherein each one of the first magnetic members 22, 24, 26 is provided for each one of the three converter units 14, 16, 18. Each of the first magnetic members 22, 24, 26 has a number of first limbs 28, 30, 32 which corresponds to the number of the phases of the power grid 20, which has a three-phase alternating voltage. Each of the first magnetic members 22, 24, 26 has a first and a second yoke member 34, 36. First ends of the first limbs 28, 30, 32 are connected to the first yoke member 34, and second ends of the first limbs 28, 30, 32 are connected to the second yoke member 36 (FIG 12).

Moreover, each of the first limbs 28, 30, 32 is provided with a respective first winding 38. Each first winding 38 has a first end adapted to be connected with a respective one of the converter units 14, 16, 18, namely, a respective phase output of the respective of the converter units 14, 16, 18. A second end of the respective first winding is configured to be coupled with a respective one of the phases of the power grid 20, which will be further detailed below. All these first windings 38 have the same sense of winding and also the same number of turns.

In the present case the second ends of the first windings 38 which are allocated to the same phase of the power grid 20, are connected with each other forming the respective notes 84, 86, 88. The notes 84, 86, 88 are not shown in FIG 2 but can be derived from e. g. FIG 10.

The inductive reactance apparatus 10 comprises a second magnetic member 42 (FIG 2, 11) having three limbs 44, 46, 48 corresponding to the number of the phases of the power grid 20. Moreover, the second magnetic member 42 comprises a third and a fourth yoke member 50, 52. First ends of the second limbs 44, 46, 48 are connected to the third yoke member 50 and second ends of the second limbs 44, 46, 48 are connected to the fourth yoke member 52.

Each of the second limbs 44, 46, 48 is provided with at least one second winding 54 having a first end being connected with one of the respective first windings by being connected with one of the respective nodes 84, 86, 88. A second end of the second winding 54 is configured to be connected with a respective one of the three phases of the power grid 20, in order to couple the respective first windings 38 with a respective one of the phases of the power grid 20.

Moreover, the yoke members 34, 36, 50, 52 are arranged such that the first yoke members 34 are connected with the third yoke member 50 and the second yoke members 36 are connected with the fourth yoke member 52.

This allows to provide a single magnetic circuitry, wherein all the windings can be coupled magnetically in a certain way. In the present design according to FIG 2, the sense of the winding of the first windings 38 is inverse to the sense of winding of the second windings 54.

The limbs and the yoke members are made of a suitable ferromagnetic material, preferably in the present embodiment a ferrite material, e.g. containing Fe₂O₃ or the like.

In the present embodiment, the connection between the limbs and the yoke members and the connection between the yoke member is provided by direct contact. However, it can be established that a certain air gap may be provided by the connection. Especially, it is possible to form the complete first and/or second magnetic member 22, 42 as an integral component. Also, it is possible to form the complete first and second magnetic members 22, 44 as a single integral component. However, depending on the application and the production capabilities, differing designs can be provided.

In the present case, it is further provided that the control device 70 operates the converter units 14, 16, 18 in an interleaved manner. At the nodes 84, 86, 88, the capacitors 58 are connected with their first ends, wherein their second ends are connected with each other.

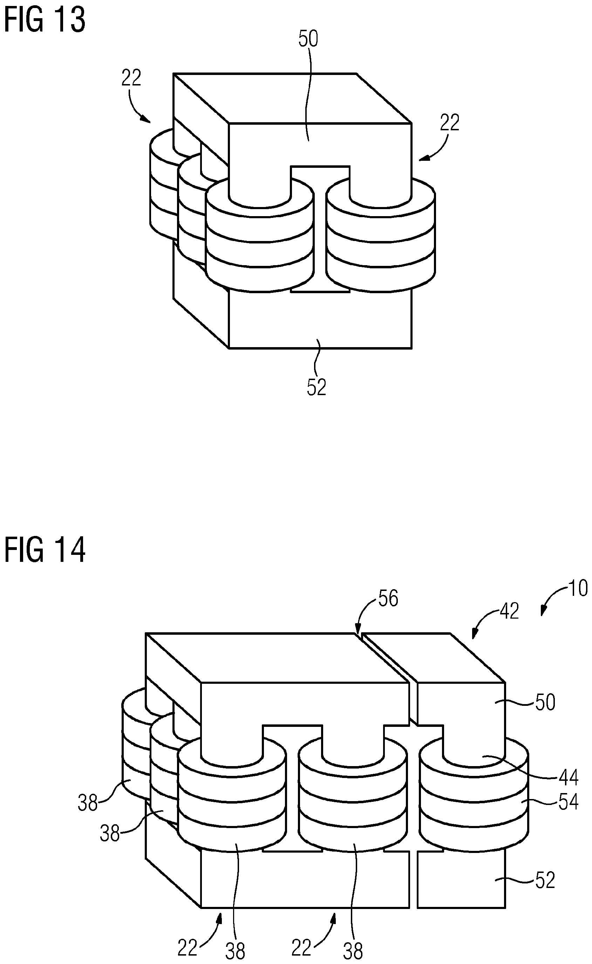

FIG 13 shows in a schematically view two first magnetic members 22 which are provided with a third and a fourth yoke member of a second magnetic member 42. The design of FIG 13 may be achieved by providing two first magnetic members 22 according to FIG 12. In FIG 12, the first magnetic members 22 are shown only with two first windings 38 on the outer limbs 28, 32, wherein the inner limb 30 is shown without a winding so that an air gap 90 is visible.

FIG 14 shows the inductive reactance apparatus 10 based on FIG 13, wherein the second magnetic member 42 is added.

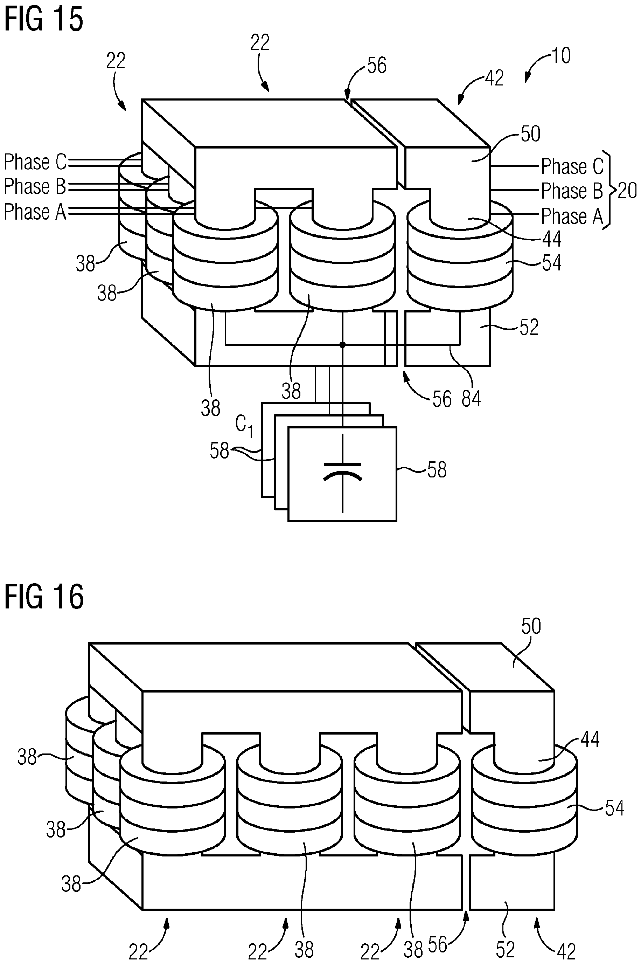

FIG 15 shows the inductive reactance apparatus 10 according to FIG 14, wherein additional conductors for the phases of the power grid 20, namely phase A, phase B, and phase C as well as the three respective capacitors 58 are shown connected to respective notes 84,86, 88, wherein in FIG 15 only the node 84 is visible.

The inductive reactance apparatus 10 according to FIG 14, 15 is provided for the energy converter 12 having only two converter units 14, 16. If the energy converter 12 comprises three converter units 14, 16, 18, the inductive reactance apparatus 10 is adapted according to the schematic perspective view according to FIG 16. This embodiment shows how the inductive reactance apparatus 10 needs to be adapted according to the number of the converter units 14, 16, 18 of the energy converter 12. The number of the first magnetic members 22 corresponds to the number of the converter units 14, 16, 18. Each of the first magnetic members 22 is allocated to a certain one of the converter units 14, 16, 18. Moreover, each of the first magnetic members 22 is adapted to a number of the phases which need to be operated. In the present embodiment, three phases are provided.

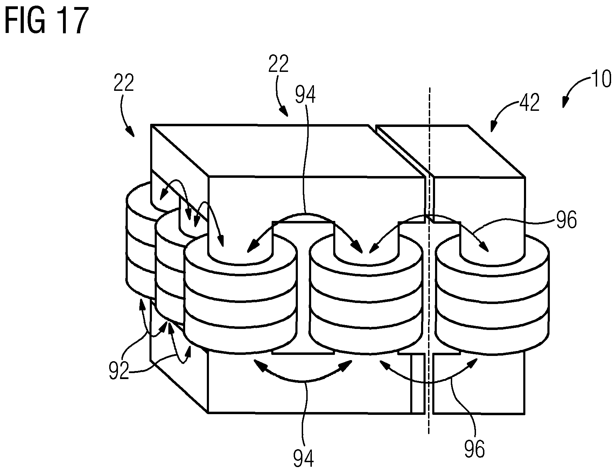

FIG 17 shows the inductive reactance apparatus 10 of FIG 15, wherein the magnetic couplings or magnetic fluxes, respectively, are indicated by arrows 92, 94, 96. Also, from FIG 14, 15, 16, 17, it is apparent that the second magnetic member 42 is connected with the first magnetic members 22, 24 via an air gap 56. The air gap 56 allows adjusting of the coupling.

The arrow 92 represents grid frequency and a n switching frequency flux, wherein n is the number of interleaved sections. It is noted, that this flows between the phases and can be controlled via the air gaps 56. The arrow 94 shows a magnetic flux having a frequency equal to the switching frequency and flows only between the interleaved windings. The arrow 96 corresponds to a common mode flux that flows during imbalance or due to common mode currents through the energy converter 12.

It can be seen from FIG 17 that the main magnetic flux flows between the interleaved inductor sections formed by the first magnetic members 22 and the grid conductor section formed by the second magnetic member 42 is common mode.

In order to understand the impact of changes, separate simulations were performed for an energy converter connected using the different inductive reactance apparatuses 10 according to FIG 11 through 14.

In this regard, it should be noted that the second magnetic member 42 according to FIG 11 corresponds to the inductivity L_{g}. The energy converter 12 is operated at a switching frequency of about 45 kHz and each simulation uses the same controller and grid connection. Moreover, core sizes and air gaps in all designs are substantially the same and the terms of the windings are also substantial equal. In order to understand the effect of common mode current, the second ends of the capacitors 58 which are connected with each other, are also connected with a high-impedance to ground.

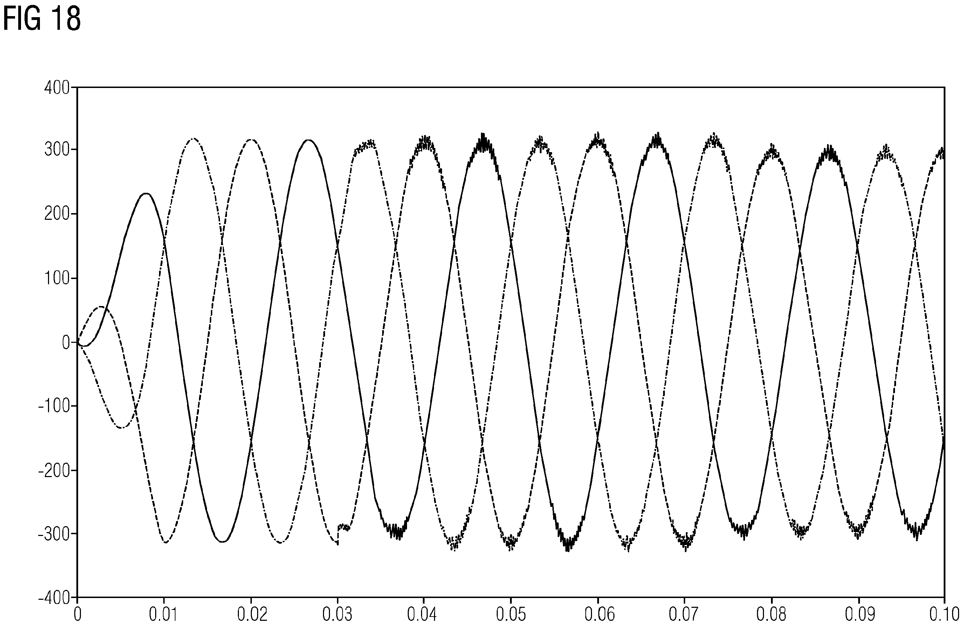

The following FIG 18 through 23 show simulations of the inventive inductive reactance apparatus.

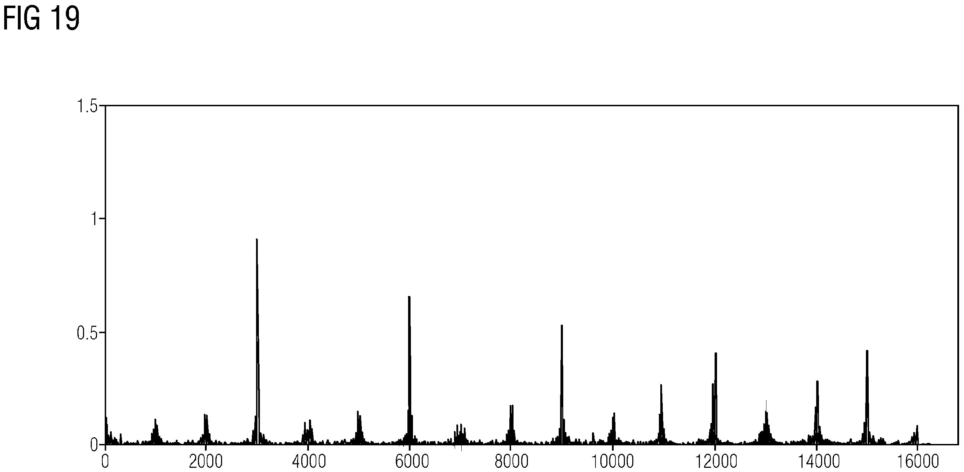

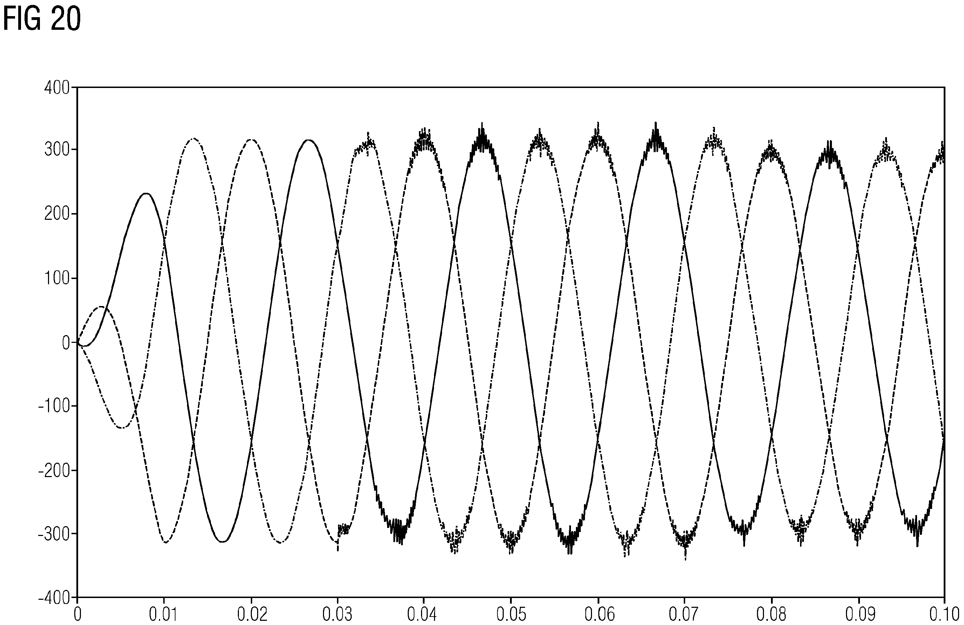

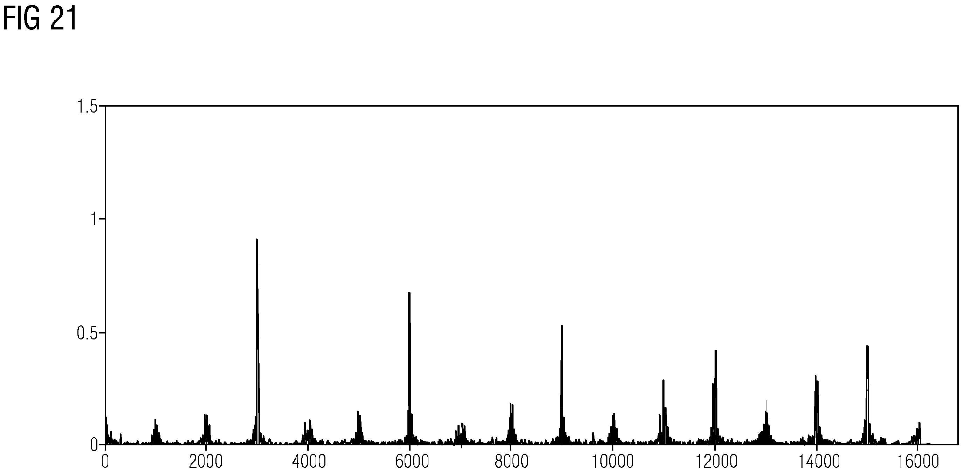

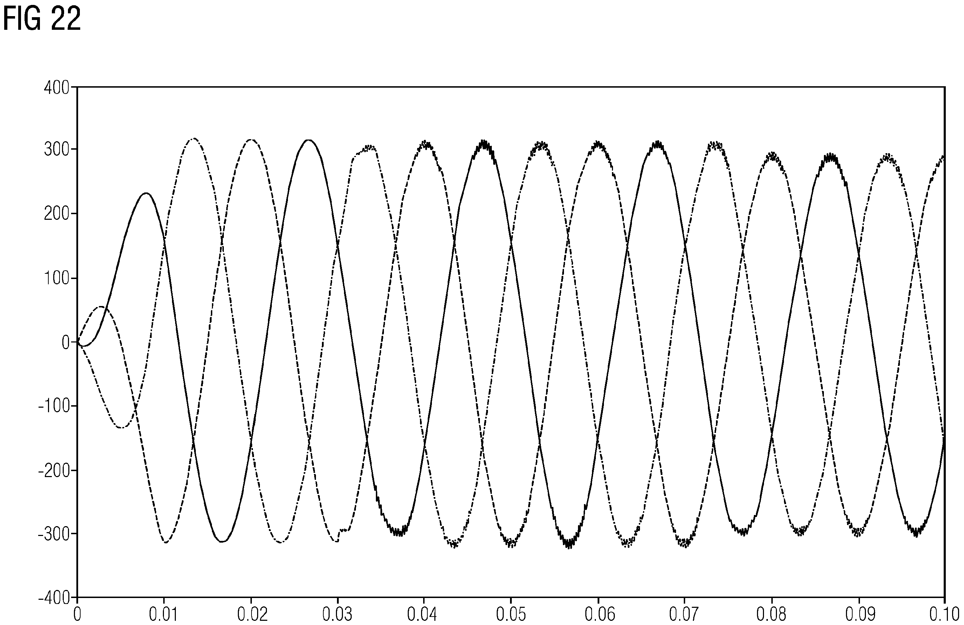

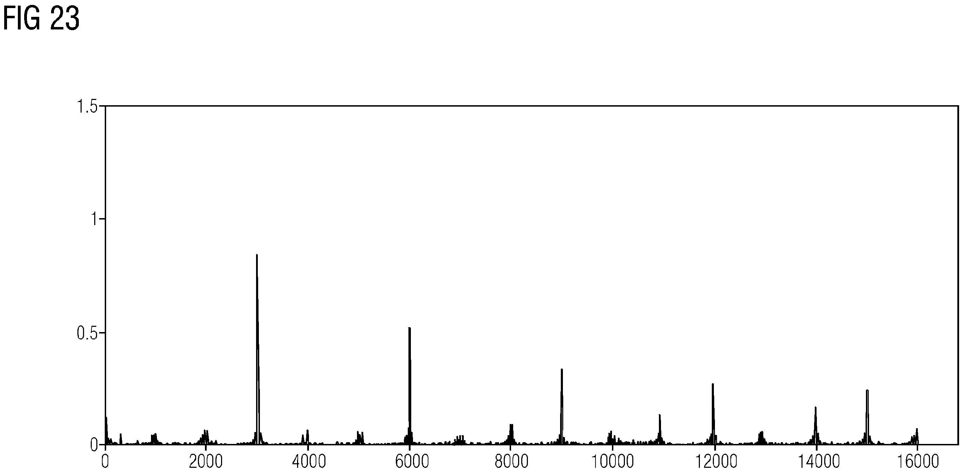

FIG 18 shows a schematic diagram of a three-phase voltage. FIG 19 shows a schematic diagram of harmonics of the three-phase voltage according to FIG 18. It can be noted that there is a significant common mode current in all of the three phases of about 2 A peak. In the design with a multi-phase inductivity as shown in FIG 11 and 13, the respective voltages are shown in FIG 20, showing a respective diagram as FIG 18, and FIG 21 shows a respective diagram as FIG 19 for the three-phase voltage according to FIG 20. According to this embodiment, the common mode current has increased despite the connection between the phases. There is less common mode reduction than with the additional core section or second magnetic member 42, repsectively. The best design according to the simulation appears to be with the combined inductivity according to FIG 14. A respective three-phase voltage is shown in a schematic diagram according to FIG 22 similar as FIG 18 and 20. The respective harmonics are shown in a diagram according to FIG 23 similar as FIG 19 and 21. A significant reduction with regard to the common mode current can be achieved. This is shown according to FIG 22, showing a respective diagram as FIG 18 and 20.

In the FIG 18, 20, 22, the abscissa is allocated to the time and the ordinate is allocated to the voltage.

It should be noted that the simulations according to FIG 18, 20, 22 start at 0.3 s and a load step at 0.75 s.

In order to compare the harmonic performance of the combined inductor design or inductive reactance apparatus a fourier transform is made from the embodiments according to FIG 18 and 22. The results are shown in respective diagrams 19, 21, showing schematic diagrams of harmonics, wherein the abscissa is allocated to the order of harmonics and the ordinate is allocated to a normalized magnitude.

As can be derived from these drawings, the design according to FIG 14 offers more than 80 % reduction of common mode interference and also allows improving slightly the filtering of switching components, while also offering a reduced volume and weight of the complete component.

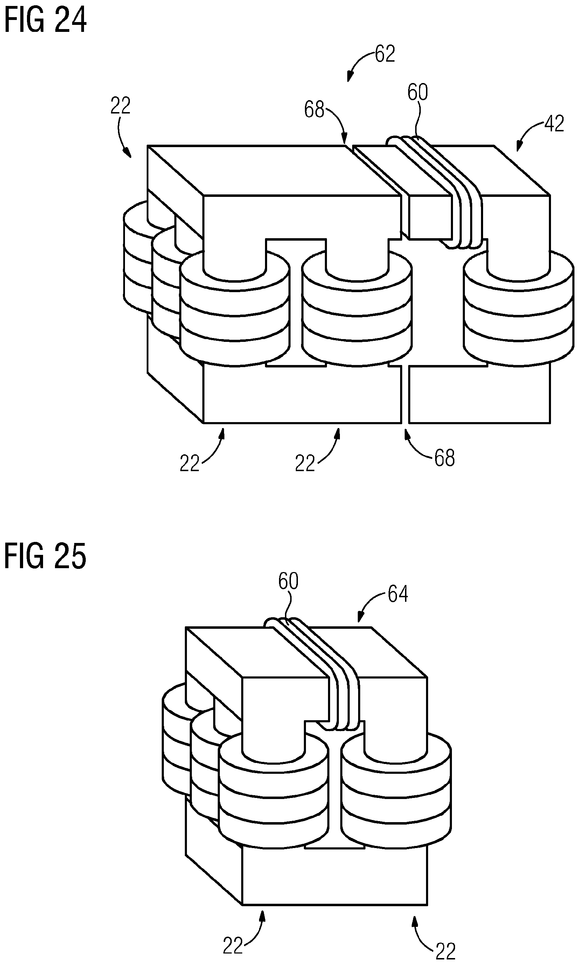

In order to further increase the common mode inductivity, an additional common mode winding 60 can be provided which is wound around the common mode core sections as shown in FIG 24. FIG 24 shows a schematic three-dimensional view according to FIG 14 wherein the common mode winding 60 is additionally provided as well as air gaps 68 forming an inductive reactance apparatus 62. The common mode windings 60 may be provided separately for each of the phases. The design according to the FIG 24 is especially provided for use of an interleaved modus. Similar to the common mode inductivities, the common mode windings can be formed by wrapping all three phases around the common core of the second magnetic member 42. Although the winding 60 is only shown in an upper portion of the second magnetic member 42, it may be also provided in a lower portion of the second magnetic member 42. Also, it is possible to provide the winding 60 at both portions of the second magnetic member 42. The winding 60 is preferably arranged at a portion of the magnetic core that is intended to be connected with the first magnetic members 22. It should also be noted that, in FIG 24, the core is shown very wide. However, the actual core section between the two inductivities could be smaller and the size can be independent from other core sections, especially having in view that preferably only the common mode flux will pass there between.

A respective design for a non-interleaved application is shown in the schematic three-dimensional view according to FIG 25 which is based on the design of FIG 13. As can be derived from FIG 25, the additional common mode winding 60 is provided at the third or the fourth yoke member 50, 52. However, it may also be provided at both of the third and fourth yoke members 50, 52.

FIG 25 shows an inductive reactance apparatus 64 based on the design according to FIG 13 having also a common mode winding 60. This design is directed to be used with non-interleaved operated converter units 14, 16.

The invention allows a smaller size and weight of the inductive reactance apparatus. Moreover, a better harmonic performance, especially in view of common mode filtering, can be achieved. Moreover, a common mode inductance allows improving performance during startup and transients.

The invention allows the design of the inductive reactance apparatus to be improved by an additional core section, namely, the second magnetic member 42 in order to allow integration to an LCL-circuit 10 without a third inductivity stage. The proposed designs do not require such a stage. Only small call sections are required to connect the inductor stages. Therefore, the inductive reactance apparatus can be designed light-weighted due to the reduction of core material.

The invention allows also a design e.g. according to FIG 14 to offer additional common mode filtering that is not offered in previous designs of the art. The integration with an LCL-Filter also offers a better filtering of switching harmonics compared to pure inductive solutions.

One issue with the coupled inductors is that the resulting AC-inductance is small for basic frequency, for example 50 Hz, resulting in high speed. Also, impedance is offered during startup or during transience. The proposed design will result in a higher overall inductance to improve the controllability of the converter during these situations.

Variations and modifications are possible within the scope of the appended claims.

### Reference characters

- 10: inductive reactance apparatus
- 12: energy converter
- 14: converter unit
- 16: converter unit
- 18: converter unit
- 20: power grid
- 22: first magnetic member
- 24: first magnetic member
- 26: first magnetic member
- 28: first limb
- 30: first limb
- 32: first limb
- 34: first yoke member
- 36: second yoke member
- 38: first winding
- 40: DC-network
- 42: second magnetic member
- 44: second limb
- 46: second limb
- 48: second limb
- 50: third yoke member
- 52: fourth yoke member
- 54: second winding
- 56: air gap
- 58: capacitor
- 60: common mode winding
- 62: inductive reactance apparatus
- 64: inductive reactance apparatus
- 66: air gap
- 68: air gap
- 70: control device
- 72: magnetic core
- 74: winding
- 76: winding
- 78: magnetic core
- 80: inner limb
- 82: outer limb
- 84: node
- 86: node
- 88: node
- 90: air gap
- 92: arrow
- 94: arrow
- 96: arrow

## Claims

1. Inductive reactance apparatus (10) for use with an energy converter (12) comprising at least two converter units (14, 16, 18) operating in a parallel manner, wherein the inductive reactance apparatus (10) is configured to couple the at least two converter units (14, 16, 18) with a power grid (20), both providing at least two phases of an alternating voltage, the inductive reactance apparatus (10) comprising:
- at least two first magnetic members (22, 24, 26), wherein one of the first magnetic members (22, 24, 26) is provided for each one of the at least two converter units (14, 16, 18),
- each of the first magnetic members (22, 24, 26) has a number of first limbs (28, 30, 32) corresponding to the number of the phases,
- each of the first magnetic members (22, 24, 26) has a first and a second yoke member (34, 36), wherein first ends of the first limbs (28, 30, 32) are connected to the first yoke member (34), and second ends of the first limbs (28, 30, 32) are connected to the second yoke member (36), and
- each of the first limbs (28, 30, 32) is provided with a respective first winding (38) having a first end adapted to be connected with a respective one of the converter units (14, 16, 18) and a second end configured to be coupled with a respective one of the phases of the power grid (20), wherein all these first windings (38) have the same sense of winding, **characterized by**
- a second magnetic member (42) having a number of second limbs (44, 46, 48) corresponding to the number of the phases and a third and a fourth yoke member (50, 52), wherein first ends of the second limbs (44, 46, 48) are connected to the third yoke member (50) and second ends of the second limbs (44, 46, 48) are connected to the fourth yoke member (52),
- wherein each of the second limbs (44, 46, 48) is provided with at least one second winding (54) having a first end being connected with at least one of the respective first windings (38) and a second end configured to be connected with a respective one of the phases of the power grid (20), in order to couple the at least one of the respective first windings (38) with a respective one of the phases of the power grid (20), and
- wherein the yoke members (34, 36, 50, 52) are arranged such that the first yoke members (34) are connected with the third yoke member (50) and the second yoke members (36) are connected with the fourth yoke member (52).

2. Inductive reactance apparatus according to claim 1 for use with an energy converter (12) comprising three converter units (14, 16, 18) operating in a parallel manner, comprising three first magnetic members (22, 24, 26), wherein one of the first magnetic members (22, 24, 26) is provided for each of the three converter units (14, 16, 18).

3. Inductive reactance apparatus according to anyone of the preceding claims, **characterized in that** the sense of the winding of the first windings (38) is inverse to the sense of the winding of the second windings (54).

4. Inductive reactance apparatus according to claim 1, **characterized in that** the second magnetic member (42) has an additional limb without any winding, the additional limb being connected with the third and the fourth yoke member (50, 52), wherein the sense of the winding of the first windings (38) is the same as the sense of the winding of the second windings (54).

5. Inductive reactance apparatus according to anyone of the preceding claims, **characterized in that** the connection between at least one of the first yoke members (34, 36) and the third yoke member (50) and/or between at least one of the second yoke members (34, 36) and the fourth yoke member (52) comprises an air gap (56).

6. Inductive reactance apparatus according to anyone of the preceding claims, **characterized in that** each of the second windings (54) comprises a number of independent winding portions corresponding to the number of the first windings (54) of a respective one of the first magnetic members (22), wherein each of the winding portions is connected with at least one of the respective ones of the first windings (38).

7. Inductive reactance apparatus according to anyone of the preceding claims 1 through 4, **characterized in that**, for each of the second windings (54), the first end is connected with the second ends of all of the first windings (38) corresponding to the same phase.

8. Inductive reactance apparatus according to anyone of the preceding claims, **characterized by** at least two capacitors (58), wherein one capacitor (58) is provided for each of the phases, wherein a certain one of the at least two capacitors (58) is connected to the first end of the respective second winding (54).

9. Inductive reactance apparatus according to anyone of the preceding claims, **characterized in that** the third and/or the fourth yoke member (50, 52) comprises a common mode suppression winding (60).

10. Inductive reactance apparatus (10, 62, 64) according to claim 1, **characterized by**
- a second magnetic member (42) having a third and a fourth yoke member (50, 52),
- wherein the yoke members (34, 36, 50, 52) are arranged such that the first yoke members (34) are connected with the third yoke member (50) and the second yoke members (36) are connected with the fourth yoke member (52), and
- the third and/or the fourth yoke member (50, 52) comprises a common mode suppression winding (60).

11. Inductive reactance apparatus according to claim 10, **characterized in that** the second magnetic member (42) has a number of second limbs (44, 46, 48) corresponding to the number of the phases, wherein first ends of the second limbs (44, 46, 48) are connected to the third yoke member (50) and second ends of the second limbs (44, 46, 48) are connected to the fourth yoke member (52), wherein each of the second limbs (44, 46, 48) is provided with at least one second winding (54) having a first end being connected with at least one of the respective first windings (38) and a second end configured to be connected with a respective one of the phases of the power grid (20), in order to couple the at least one of the respective first windings (38) with a respective one of the phases of the power grid (20).

12. Inductive reactance apparatus according to anyone of the preceding claims, **characterized in that** at least one of the first limbs (28, 30, 32) is provided with an air gap.

13. Inductive reactance apparatus according to anyone of the preceding claims, **characterized in that** at least one of the third and fourth yoke member (50, 52) is provided with an air gap (68).

14. Inductive reactance apparatus according to anyone of the preceding claims, **characterized by** a housing configured to include the magnetic members (22, 42) and at least one capacitor (58).

15. Energy converter (12) for coupling an energy source (40) connected to the energy converter (12) with a power grid (20), both of the energy converter (12) and the power grid (20) providing at least two phases of an alternating voltage, the energy converter (12) comprising:
- at least two converter units (13, 16, 18), each of the converter units (13, 16, 18) being configured to provide power conversion with regard to the at least two phases,
- a control device (70) for controlling at least the converter units (13, 16, 18), wherein the control device (70) is configured to operate the converter units (13, 16, 18) in a parallel manner, and
- an inductive reactance apparatus (10, 62, 64) for connecting the converter units (13, 16, 18) with the power grid (20),
**characterized in that**
the inductive reactance apparatus (10, 62, 64) is designed according to anyone of the preceding claims.

16. Energy converter according to claim 15, **characterized in that** the control device (70) is configured to operate the converter units (13, 16, 18) in an interleaved parallel manner.

17. Energy converter according to claim 15 or 16, wherein both of the energy converter (12) and the power grid (20) provide three phases of an alternating voltage and the energy converter (12) comprises three converter units (13, 16, 18), each of the converter units (13, 16, 18) being configured to provide power conversion with regard to the three phases.

## Patentansprüche

1. Induktive Reaktanzeinrichtung (10) zur Verwendung mit einem Energiewandler (12), der mindestens zwei Wandlereinheiten (14, 16, 18) umfasst, die parallel betrieben werden, wobei die induktive Reaktanzeinrichtung (10) dazu ausgelegt ist, die mindestens zwei Wandlereinheiten (14, 16, 18) an ein Stromnetz (20) zu koppeln, wobei beide mindestens zwei Phasen einer Wechselspannung bereitstellen, wobei die induktive Reaktanzeinrichtung (10) Folgendes umfasst:
- mindestens zwei erste magnetische Elemente (22, 24, 26), wobei eines der ersten magnetischen Elemente (22, 24, 26) für jede der mindestens zwei Wandlereinheiten (14, 16, 18) bereitgestellt ist,
- wobei jedes der ersten magnetischen Elemente (22, 24, 26) weist eine Anzahl von ersten Schenkeln (28, 30, 32) auf, die der Anzahl der Phasen entsprechen,
- wobei jedes der ersten magnetischen Elemente (22, 24, 26) weist ein erstes und ein zweites Jochelement (34, 36) auf, wobei erste Enden der ersten Schenkel (28, 30, 32) mit dem ersten Jochelement (34) verbunden sind und zweite Enden der ersten Schenkel (28, 30, 32) mit dem zweiten Jochelement (36) verbunden sind, und
- wobei jeder der ersten Schenkel (28, 30, 32) ist mit einer jeweiligen ersten Wicklung (38) versehen, die ein erstes Ende, das angepasst ist, mit einer jeweiligen der Wandlereinheiten (14, 16, 18) verbunden zu sein, und ein zweites Ende, das dazu ausgelegt ist, an eine jeweilige der Phasen des Stromnetzes (20) gekoppelt zu sein, aufweist, wobei all diese ersten Wicklungen (38) denselben Wicklungssinn aufweisen, **gekennzeichnet durch**
- ein zweites magnetisches Element (42) mit einer Anzahl von zweiten Schenkeln (44, 46, 48), die der Anzahl der Phasen entsprechen, und einem dritten und einem vierten Jochelement (50, 52), wobei die ersten Enden der zweiten Schenkel (44, 46, 48) mit dem dritten Jochelement (50) verbunden sind und zweite Enden der zweiten Schenkel (44, 46, 48) mit dem vierten Jochelement (52) verbunden sind,
- wobei jeder der zweiten Schenkel (44, 46, 48) mit mindestens einer zweiten Wicklung (54) versehen ist, die ein erstes Ende, das mit mindestens einer der jeweiligen ersten Wicklungen (38) verbunden ist, sowie ein zweites Ende aufweist, das dazu ausgelegt ist, mit einer jeweiligen der Phasen des Stromnetzes (20) verbunden zu sein, um die mindestens eine der jeweiligen ersten Wicklungen (38) an eine jeweilige der Phasen des Stromnetzes (20) zu koppeln, und
- wobei die Jochelemente (34, 36, 50, 52) derart angeordnet sind, dass die ersten Jochelemente (34) mit dem dritten Jochelement (50) verbunden sind, und die zweiten Jochelemente (36) mit dem vierten Jochelement (52) verbunden sind.

2. Induktive Reaktanzeinrichtung nach Anspruch 1 zur Verwendung mit einem Energiewandler (12), der drei Wandlereinheiten (14, 16, 18) umfasst, die parallel betrieben werden, die drei erste magnetische Elemente (22, 24, 26) umfasst, wobei eines der ersten magnetischen Elemente (22, 24, 26) für jede der drei Wandlereinheiten (14, 16, 18) bereitgestellt ist.

3. Induktive Reaktanzeinrichtung nach einem der vorhergehenden Ansprüche, **dadurch gekennzeichnet, dass** der Wicklungssinn der ersten Wicklungen (38) dem Wicklungssinn der zweiten Wicklungen (54) entgegengesetzt ist.

4. Induktive Reaktanzeinrichtung nach Anspruch 1, **dadurch gekennzeichnet, dass** das zweite magnetische Element (42) einen zusätzlichen Schenkel ohne Wicklung aufweist, wobei der zusätzliche Schenkel mit dem dritten und dem vierten Jochelement (50, 52) verbunden ist, wobei der Wicklungssinn der ersten Wicklungen (38) derselbe ist wie der Wicklungssinn der zweiten Wicklungen (54).

5. Induktive Reaktanzeinrichtung nach einem der vorhergehenden Ansprüche, **dadurch gekennzeichnet, dass** die Verbindung zwischen mindestens einem der ersten Jochelemente (34, 36) und dem dritten Jochelement (50) und/oder zwischen mindestens einem der zweiten Jochelemente (34, 36) und dem vierten Jochelement (52) einen Luftspalt (56) umfasst.

6. Induktive Reaktanzeinrichtung nach einem der vorhergehenden Ansprüche, **dadurch gekennzeichnet, dass** jede der zweiten Wicklungen (54) eine Anzahl von unabhängigen Wicklungsabschnitten umfasst, die der Anzahl der ersten Wicklungen (54) eines jeweiligen der ersten magnetischen Elemente (22) entsprechen, wobei jeder der Wicklungsabschnitte mit mindestens einer der jeweiligen ersten Wicklungen (38) verbunden ist.

7. Induktive Reaktanzeinrichtung nach einem der vorhergehenden Ansprüche 1 bis 4, **dadurch gekennzeichnet, dass** bei jeder der zweiten Wicklungen (54) das erste Ende mit den zweiten Enden von allen ersten Wicklungen (38), die derselben Phase entsprechen, verbunden ist.

8. Induktive Reaktanzeinrichtung nach einem der vorhergehenden Ansprüche, **gekennzeichnet durch** mindestens zwei Kondensatoren (58), wobei ein Kondensator (58) für jede der Phasen bereitgestellt ist, wobei ein bestimmter der mindestens zwei Kondensatoren (58) mit dem ersten Ende der jeweiligen zweiten Wicklung (54) verbunden ist.

9. Induktive Reaktanzeinrichtung nach einem der vorhergehenden Ansprüche, **dadurch gekennzeichnet, dass** das dritte und/oder das vierte Jochelement (50, 52) eine Gleichtaktunterdrückungswicklung (60) umfasst.

10. Induktive Reaktanzeinrichtung (10, 62, 64) nach Anspruch 1, **gekennzeichnet durch**
- ein zweites magnetisches Element (42) mit einem dritten und einem vierten Jochelement (50, 52),
- wobei die Jochelemente (34, 36, 50, 52) derart angeordnet sind, dass die ersten Jochelemente (34) mit dem dritten Jochelement (50) verbunden sind und die zweiten Jochelemente (36) mit dem vierten Jochelement (52) verbunden sind, und
- wobei das dritte und/oder das vierte Jochelement (50, 52) umfasst eine Gleichtaktunterdrückungswicklung (60).

11. Induktive Reaktanzeinrichtung nach Anspruch 10, **dadurch gekennzeichnet, dass** das zweite magnetische Element (42) eine Anzahl von zweiten Schenkeln (44, 46, 48) aufweist, die der Anzahl der Phasen entsprechen, wobei erste Enden der zweiten Schenkel (44, 46, 48) mit dem dritten Jochelement (50) verbunden sind und zweite Enden der zweiten Schenkel (44, 46, 48) mit dem vierten Jochelement (52) verbunden sind, wobei jeder der zweiten Schenkel (44, 46, 48) mit mindestens einer zweiten Wicklung (54) versehen ist, die ein erstes Ende, das mit mindestens einer der jeweiligen ersten Wicklungen (38) verbunden ist, sowie ein zweites Ende aufweist, das dazu ausgelegt ist, mit einer jeweiligen der Phasen des Stromnetzes (20) verbunden zu sein, um die mindestens eine der jeweiligen ersten Wicklungen (38) an eine jeweilige der Phasen des Stromnetzes (20) zu koppeln.

12. Induktive Reaktanzeinrichtung nach einem der vorhergehenden Ansprüche, **dadurch gekennzeichnet, dass** mindestens einer der ersten Schenkel (28, 30, 32) mit einem Luftspalt versehen ist.

13. Induktive Reaktanzeinrichtung nach einem der vorhergehenden Ansprüche, **dadurch gekennzeichnet, dass** mindestens eines des dritten und des vierten Jochelements (50, 52) mit einem Luftspalt (68) versehen ist.

14. Induktive Reaktanzeinrichtung nach einem der vorhergehenden Ansprüche, **gekennzeichnet durch** ein Gehäuse, das dazu ausgelegt ist, die magnetischen Elemente (22, 42) und mindestens einen Kondensator (58) zu beinhalten.

15. Energiewandler (12) zum Koppeln einer Energiequelle (40), die mit dem Energiewandler (12) verbunden ist, an ein Stromnetz (20), wobei sowohl der Energiewandler (12) als auch das Stromnetz (20) mindestens zwei Phasen einer Wechselspannung bereitstellen, wobei der Energiewandler (12) Folgendes umfasst:
- mindestens zwei Wandlereinheiten (13, 16, 18), wobei jede der Wandlereinheiten (13, 16, 18) dazu ausgelegt ist, eine Stromumwandlung mit Bezug auf die mindestens zwei Phasen bereitzustellen,
- eine Steuervorrichtung (70) zum Steuern mindestens der Wandlereinheiten (13, 16, 18), wobei die Steuervorrichtung (70) dazu ausgelegt ist, die Wandlereinheiten (13, 16, 18) parallel zu betreiben, und
- eine induktive Reaktanzeinrichtung (10, 62, 64) zum Verbinden der Wandlereinheiten (13, 16, 18) mit dem Stromnetz (20),
**dadurch gekennzeichnet, dass**
die induktive Reaktanzeinrichtung (10, 62, 64) nach einem der vorhergehenden Ansprüche konstruiert ist.

16. Energiewandler nach Anspruch 15, **dadurch gekennzeichnet, dass** die Steuervorrichtung (70) dazu ausgelegt ist, die Wandlereinheiten (13, 16, 18) verschachtelt parallel zu betreiben.

17. Energiewandler nach Anspruch 15 oder 16, wobei sowohl der Energiewandler (12) als auch das Stromnetz (20) drei Phasen einer Wechselspannung bereitstellen und der Energiewandler (12) drei Wandlereinheiten (13, 16, 18) umfasst, wobei jede der Wandlereinheiten (13, 16, 18) dazu ausgelegt ist, eine Stromumwandlung mit Bezug auf die drei Phasen bereitzustellen.

## Revendications

1. Installation (10) à réactance inductive à utiliser avec un convertisseur (12) d'énergie comprenant au moins deux unités (14, 16, 18) de convertisseur fonctionnant d'une manière en parallèle dans laquelle l'installation (10) à réactance inductive est configurée pour connecter les au moins deux unités (14, 16, 18) de convertisseur à un réseau (20) de distribution d'électricité, les deux donnant au moins deux phases d'une tension alternative, l'installation (10) à réactance inductive comprenant :
- au moins deux premiers éléments (22, 24, 26) magnétiques, l'un des premiers éléments (22, 24, 26) magnétiques étant prévu pour chacune des au moins deux unités (14, 16, 18) de convertisseur,
- chacun des premiers éléments (22, 24, 26) magnétiques a un nombre de premières jambes (28, 30, 32) correspondant au nombre de phases,
- chacun des premiers éléments (22, 24, 26) magnétiques a un premier et un deuxième élément (34, 36) de culasse, des premières extrémités des premières jambes (28, 30, 32) étant connectées au premier élément (34) de culasse et des secondes extrémité des premières jambes (28, 30, 32) étant connectées au deuxième élément (36) de culasse, et
- chacune des premières jambes (28, 30, 32) est pourvue d'un premier enroulement (38) respectif ayant une première extrémité propre à être connectée à l'une respective des unités (14, 16, 18) de convertisseur et une seconde extrémité configurée pour être reliée à l'une respective des phases du réseau (20) de distribution d'électricité, tous ces premiers enroulements (38) ayant le même sens d'enroulement,
**caractérisée par**
- un deuxième élément (42) magnétique, ayant un nombre de deuxièmes jambes (44, 46, 48) correspondant au nombre de phases, et un troisième et un quatrième élément (50, 52) de culasse, des premières extrémités des deuxièmes jambes (44, 46, 48) étant connectées au troisième élément (50) de culasse et des secondes extrémités des deuxièmes jambes (44, 46, 48) étant connectées au quatrième élément (52) de culasse,
- dans lequel chacune des deuxièmes jambes (44, 46, 48) est pourvue au moins d'un deuxième enroulement (54) ayant une première extrémité connectée à au moins l'un des premiers enroulements (38) respectifs et une seconde extrémité configurée pour être connectée à l'une respective des phases du réseau (20) de distribution d'électricité, afin de relier le au moins un des premiers enroulements (38) respectifs à l'une respective des phases du réseau (20) de distribution d'électricité, et
- dans lequel les éléments (34, 36, 50, 52) de culasse sont disposés de manière à ce que les premiers éléments (34) de culasse soient connectés au troisième élément (50) de culasse et de manière à ce que les deuxièmes éléments (36) de culasse soient connectés au quatrième élément (52) de culasse.

2. Installation à réactance inductive suivant la revendication 1 à utiliser avec un convertisseur (12) d'énergie comprenant trois unités (14, 16, 18) de convertisseur fonctionnant d'une manière en parallèle, comprenant trois premiers éléments (22, 24, 26) magnétiques, l'un des premiers éléments (22, 24, 26) magnétiques étant prévu pour chacune des trois unités (14, 16, 18) de convertisseur.

3. Installation à réactance inductive suivant l'une quelconque des revendications précédentes, **caractérisée en ce que** le sens de l'enroulement des premiers enroulements (38) est contraire au sens de l'enroulement des deuxièmes enroulements (54).

4. Installation à réactance inductive suivant la revendication 1, **caractérisée en ce que** le deuxième élément (42) magnétique a une jambe supplémentaire sans enroulement, la jambe supplémentaire étant connectée au troisième et au quatrième élément (50, 52) de culasse, le sens de l'enroulement des premiers enroulements (38) étant le même que le sens de l'enroulement des deuxièmes enroulements (54).

5. Installation à réactance inductive suivant l'une quelconque des revendications précédentes, **caractérisée en ce que** la connexion, entre au moins l'un des premiers éléments (34, 36) de culasse et le troisième élément (50) de culasse et/ou entre au moins l'un des deuxièmes éléments (34, 36) de culasse et le quatrième élément (52) de culasse, comprend un entrefer (56).

6. Installation à réactance inductive suivant l'une quelconque des revendications précédentes, **caractérisée en ce que** chacun des deuxièmes enroulements (54) comprend un nombre de parties indépendantes d'enroulement correspondant au nombre des premiers enroulements (54) de l'un respectif des premiers éléments (22) magnétiques, chacune des parties d'enroulement étant connectée à au moins l'un des premiers enroulements (38) respectifs.

7. Installation à réactance inductive suivant l'une quelconque des revendications 1 à 4 précédentes, **caractérisée en ce que**, pour chacun des deuxièmes enroulements (54), la première extrémité est connectée aux secondes extrémités de tous les premiers enroulements (38) correspondant à la même phase.

8. Installation à réactance inductive suivant l'une quelconque des revendications précédentes, **caractérisée par** au moins deux condensateurs (58), un condensateur (58) étant prévu pour chacune des phases, un certain des au moins deux condensateurs (58) étant connecté à la première extrémité du deuxième enroulement (54) respectif.

9. Installation à réactance inductive suivant l'une quelconque des revendications précédentes, **caractérisée en ce que** le troisième et/ou le quatrième élément (50, 52) de culasse comprend un enroulement (60) de suppression en mode commun.

10. Installation (10, 62, 64) à réactance inductive suivant la revendication 1, **caractérisée par**
- un deuxième élément (42) magnétique ayant un troisième et un quatrième élément (50, 52) de culasse,
- dans lequel les éléments (34, 36, 50, 52) de culasse sont disposés de manière à ce que les premiers éléments (34) de culasse soient connectés au troisième élément (50) de culasse, et de manière à ce que les deuxièmes éléments (36) de culasse soient connectés au quatrième élément (52) de culasse, et
- le troisième et/ou le quatrième élément (50, 52) de culasse comprend un enroulement (60) de suppression en mode commun.

11. Installation à réactance inductive suivant la revendication 10, **caractérisée en ce que** le deuxième élément (42) magnétique a un nombre de deuxièmes jambes (44, 46, 48) correspondant au nombre de phases, des premières extrémités des deuxièmes jambes (44, 46, 48) étant connectées au troisième élément (50) de culasse et des secondes extrémités des deuxièmes jambes (44, 46, 48) étant connectées au quatrième élément (52) de culasse, chacune des deuxièmes jambes (44, 46, 48) étant pourvues d'au moins un deuxième enroulement (54) ayant une première extrémité connectée à au moins l'un des premiers enroulements (38) respectifs et une seconde extrémité configurée pour être connectée à l'une respective des phases du réseau (20) de distribution d'électricité, afin de relier le au moins un des premiers enroulements (38) respectifs à l'une respective des phases du réseau (20) de distribution d'électricité.

12. Installation à réactance inductive l'une quelconque des revendications précédentes, **caractérisée en ce qu'**au moins l'une des premières jambes (28, 30, 32) est pourvue d'un entrefer.

13. Installation à réactance inductive l'une quelconque des revendications précédentes, **caractérisée en ce qu'**au moins l'un des troisièmes et quatrièmes éléments (50, 52) de culasse est pourvu d'un entrefer (68).

14. Installation à réactance inductive l'une quelconque des revendications précédentes, **caractérisée par** une enveloppe configurée pour inclure les éléments (22, 42) magnétiques et au moins un condensateur (58).

15. Convertisseur (12) d'énergie pour relier une source (40) d'énergie connectée au convertisseur (12) d'énergie à un réseau (20) de distribution d'électricité, à la fois le convertisseur (12) d'énergie et le réseau (20) de distribution d'électricité fournissant au moins deux phases d'une tension alternative, le convertisseur (12) d'énergie comprenant :
- au moins deux unités (13, 16, 18) de convertisseur, chacune des unités (13, 16, 18) de convertisseur étant configurée pour fournir une conversion de puissance en ce qui concerne les au moins deux phases,
- un dispositif (70) de commande pour commander au moins les unités (13, 16, 18) de convertisseur, le dispositif (70) de commande étant configuré pour faire fonctionner les unités (13, 16, 18) de convertisseur d'une manière en parallèle, et
- une installation (10, 62, 64) à réactance inductive pour connecter les unités (13, 16, 18) de convertisseurs au réseau (20) de distribution d'électricité.
**caractérisé en ce que**
- l'installation (10, 62, 64) à réactance inductive est conçue suivant l'une quelconque des revendications précédentes.

16. Convertisseur d'énergie suivant la revendication 15, **caractérisé en ce que** le dispositif (70) de contrôle est configuré pour faire fonctionner les unités (13, 16, 18) de convertisseur d'une manière en parallèle entrelacée.

17. Convertisseur d'énergie suivant la revendication 15 ou 16, dans lequel à la fois le convertisseur (12) d'énergie et le réseau (20) de distribution d'électricité fournissent trois phases d'une tension alternative, et le convertisseur (12) d'énergie comprend trois unités (13, 16, 18) de convertisseur, chacune des unités (13, 16, 18) de convertisseur étant configurée pour fournir une conversion de puissance en ce qui concerne les trois phases.
